(19) **Europäisches Patentamt**

**European Patent Office**

**Office européen des brevets**

(11) **EP 1 353 158 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.7: **G01J 4/04**

(21) Anmeldenummer: **03002980.5**

(22) Anmeldetag: **11.02.2003**

(54) **Verfahren und Vorrichtung zur hochgenauen Kalibrierung von Polarimetern**

Method and apparatus for high precision calibration of polarimeters

Procédé et appareil pour le calibrage de haute précision de polarimètres

(84) Benannte Vertragsstaaten:
**DE FR GB IT**

(30) Priorität: **10.04.2002 EP 02008021**

(43) Veröffentlichungstag der Anmeldung:
**15.10.2003 Patentblatt 2003/42**

(73) Patentinhaber: **Thorlabs, Inc.**
**Newton New Jersey 07860 (US)**

(72) Erfinder:
• **Bandemer, Adalbert, Dr.**
**85757 Karlsfeld (DE)**
• **Krause, Egbert**
**09217 Burgstätt (DE)**

(74) Vertreter: **Rumpler, Wolfgang et al**
**Hofstetter, Schurack & Skora,**
**Patentanwälte,**
**Balanstrasse 57**
**81541 München (DE)**

(56) Entgegenhaltungen:
**DE-A- 10 023 708          US-A- 5 296 913**

• **AZZAM R M A ET AL: "CONSTRUCTION, CALIBRATION, AND TESTING OF A FOUR-DETECTOR PHOTOPOLARIMETER" REVIEW OF SCIENTIFIC INSTRUMENTS, AMERICAN INSTITUTE OF PHYSICS. NEW YORK, US, Bd. 59, Nr. 1, 1988, Seiten 84-88, XP002034814 ISSN: 0034-6748**

**Beschreibung**

**Technisches Gebiet**

Die Erfindung betrifft ein Verfahren zur Kalibrierung von vollständigen Polarimetern gemäß dem Oberbegriff des Anspruchs 1 sowie eine korrespondierende Vorrichtung.

Kommerzielle Polarimeter arbeiten entweder mit nur einem Detektor und rotierender Wellenplatte oder basieren auf Mehrdetektor-Anordnung mit vier (oder mehr) Detektoren. Vollständige Polarimeter sind Polarimeter, die alle vier Stokes-Parameter erfassen. Das erfindungsgemäße Verfahren und die erfindungsgemäßen Kalibriervorrichtungen können bei Mehrdetektor-Polarimeter-Anordnungen eingesetzt werden. Bei diesen Polarimetern wird die einfallende Lichtleistung in mindestens vier separate Leistungsanteile zerlegt. Mindestens drei der vier Leistungsanteile passieren polarisierende Elemente und werden so polarisationsabhängig. Ein oder mehrere doppelbrechende Elemente, die vor den polarisierenden Elementen angeordnet sind, sorgen dafür, dass die Maxima der vier Detektorströme bei verschiedenen Eingangspolarisationen auftreten.

Die Kalibriermatrix B des Polarimeters gibt den eindeutigen Zusammenhang zwischen den vier Detektorströmen $I_0...I_3$ und den vier Stokes-Parametern $S_0...S_3$ an.

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Aufgabe der Erfindung ist es, ein Verfahren bereitzustellen, wodurch die Matrix B sehr genau bestimmt werden kann.

Ein 4-Detektor-Polarimeter gestattet es, aus vier gemessenen Detektorströmen die Parameter

- Zustand der Polarisation (SOP = State of Polarization)
- Polarisationsgrad (DOP = Degree of Polarization) und
- Leistung

des Lichtes zu messen.

Diese Parameter sind aus den vier Stokes-Parametern $S_0$, $S_1$, $S_2$ und $S_3$ ableitbar. $S_0$ ist die Gesamtleistung, $S_1$, $S_2$ und $S_3$ werden üblicherweise auf die Gesamtleistung $S_0$ normiert, so dass die normierten Stokes-Parameter $s_1, s_2$ und $s_3$ den Polarisationszustand angeben.

Der Polarisationsgrad kennzeichnet das Verhältnis von polarisierter Leistung zur Gesamtleistung und wird durch die Formel

$$DOP = \frac{\sqrt{S_1^2 + S_2^2 + S_3^2}}{S_0}$$

beschrieben. Eine vollständige Beschreibung der Polarisationseigenschaften des Lichtes erfolgt mathematisch mit Hilfe des Stokes-Vektors.

Der Stokes-Vektor ist durch die vier Stokes-Parameter $S_0 ... S_3$ vollständig bestimmt, diese sind wie folgt definiert: $S_0$ ist die Gesamtleistung, $S_1$ ist der linear horizontal minus dem linear vertikal polarisierten Anteil, $S_2$ ist der linear 45° minus dem linear -45° polarisierten Anteil, $S_3$ ist der zirkular rechtsdrehende minus dem zirkular linksdrehend polarisierten Anteil.

Eine Wellenplatte besitzt einen richtungsabhängigen Brechungsindex. Damit erfahren die im allgemeinen linearen Teilwellen unterschiedliche Phasengeschwindigkeiten und erlangen eine Phasendifferenz, wodurch sich der Polarisationszustand ändert.

Ein Polarisator dämpft die Teilwelle in seiner Sperrrichtung stärker als die orthogonale Komponente in Durchlaßrichtung. Damit wird die transmittierte Lichtleistung polarisationsabhängig und eine einfache Detektion der Polarisation wird ermöglicht.

Polarimeter werden z.B. bei folgenden Anwendungen eingesetzt:

- Bestimmung der Polarisation, der Leistung und des Polarisationsgrades (DOP)
- Bestimmung des Polarisationsgrades (DOP) als Regelsignal für eine PMD-Kompensation
- Bestimmung der polarisationsabhängigen Dämpfung (PDL) von optischen Fasern und optischen Komponenten
- Bestimmung der Polarisations-Moden-Dispersion (PMD) von optischen Fasern und optischen Komponenten
- Analyse von doppelbrechenden und polarisierenden Materialien
- Bestimmung des Auslöschverhältnisses (Extinktion Ratio, ER) bei polarisationserhaltenden Fasern (PMF)
- Auswertung von Sensoren auf polarimetrischer Basis (z.B. Faraday-Stromsensor)
- Gewinnung von Regelsignalen in automatischen Polarisationsstellern
- u.v.m.

Neben vollständigen Polarimetern, die alle vier Stokes-Parameter erfassen, gibt es Einrichtungen, die z.B. nur die Abweichung der Polarisation von einem festgelegten Sollzustand bestimmen. Dieser Aufgabe werden bereits einfache Polarisatoren, Polarisationsstrahlteiler usw. gerecht.

**Stand der Technik**

Zur Kalibrierung eines Polarimeters werden üblicherweise bekannte Polarisationszustände und Lichtleistungen in das Polarimeter eingespeist und die dazugehörigen Detektorsignale gemessen. Aus den bekannten Polarisationszuständen und den dazugehörigen Detektorsignalen wird die Übertragungsfunktion (Kalibriermatrix) berechnet. Die optischen Eingangssignale müssen üblicherweise mit hoher Genauigkeit bekannt sein.

In [R.M.A. Azzam et al: "Construction, calibration and testing of a four-detector photopolarimeter", Review of Scientific Instruments, vol. 59, No. 1, Jan., 1988, New York, U.S, pp. 84-88] ist die Vorgehensweise der üblichen "Four Point Calibration" beschrieben.

Zur Kalibrierung des Polarimeters werden vier Polarisationen mit bekannten Stokes-Parametern $S_{i,j}$ verwendet. Die Laufvariable i beschreibt den entsprechenden Stokes-Parameter des Polarisationszustandes j. Die vier Stokes-Vektoren werden in den Spalten der Matrix S abgelegt.

$$S \quad = \quad \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

Zu jeder der vier bekannten Eingangspolarisationen werden die vier Detektorströme gemessen und in die Spalten der Matrix I eingetragen.

$$I \quad = \quad \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix}$$

Die Instrumentenmatrix A ergibt sich zu:

$$A = I * S^{-1} \quad ; \quad \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

Im allgemeinen werden die Polarisationszustände linear-horizontal (H), linear-45° (45°), zirkular-rechts (R) und linear-vertikal (V) verwendet. Damit folgt für die Matrix S:

$$S \; = \; \begin{bmatrix} 1 & 1 & 1 & 1 \\ 1 & 0 & 0 & -1 \\ 0 & 1 & 0 & 0 \\ 0 & 0 & 1 & 0 \end{bmatrix}$$

Allgemein kann die Kalibrierung aber bei beliebigen vier Polarisationen, die nicht auf einer Ebene liegen, durchgeführt werden. Zusätzlich wird gefordert, dass die Leistung konstant und der DOP =1 (DOP = 100%) ist. Nach einer Normierung auf die konstante Leistung gilt dann für diese vier Stokes-Vektoren:

$$S_0{}^2 = S_1{}^2 + S_2{}^2 + S_3{}^2$$

$$S \; = \; \begin{bmatrix} 1 & 1 & 1 & 1 \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

$$S_{1,0}{}^2 + S_{2,0}{}^2 + S_{3,0}{}^2 = 1$$

$$S_{1,1}{}^2 + S_{2,1}{}^2 + S_{3,1}{}^2 = 1$$

$$S_{1,2}{}^2 + S_{2,2}{}^2 + S_{3,2}{}^2 = 1$$

$$S_{1,3}{}^2 + S_{2,3}{}^2 + S_{3,3}{}^2 = 1$$

Die Instrumentenmatrix wird berechnet mit:

$$A = I * S^{-1} \quad ; \quad \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

anschließend invertiert

$$B = A^{-1} \quad ; \quad \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}^{-1}$$

Das so abgeglichene Polarimeter befriedigt die Beziehung:

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Ein solcher Abgleich gewährleistet allerdings nicht, dass für jede beliebig andere Eingangspolarisation mit einem DOP von 100% (DOP = 1) auch dieser Wert ermittelt wird, weil die Polarisationen und die Detektorsignale fehlerbehaftet sind.

In [B. Heffner, US 5,296,913] wird ein Verfahren vorgestellt, das mit Hilfe von wenigstens drei verschiedenen Polarisationen gleichen Polarisationsgrades die bestehende Kalibrierung eines Polarimeters verbessern kann. Die Verbesserung besteht in der Hinzufügung einer Korrekturmatrix [C].

$$[S] = [B]*[C]*[I]$$

$$\begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} c_0 & 0 & 0 & 0 \\ 0 & c_1 & 0 & 0 \\ 0 & 0 & c_2 & 0 \\ 0 & 0 & 0 & c_3 \end{bmatrix} * \begin{bmatrix} I_0 \\ I_1 \\ I_2 \\ I_3 \end{bmatrix}$$

Die Korrekturmatrix [C] hat die Form einer Diagonalmatrix mit den Elementen $c_0 \ldots c_3$, das Element $c_0$ wird gleich 1 gesetzt. Die Korrektur besteht also in der Hinzufügung von Gewichtungsfaktoren $c_1$, $c_2$ und $c_3$ zu den Detektorströmen $I_1, I_2$ und $I_3$.

$$\begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ c_1 * I_1 \\ c_2 * I_2 \\ c_3 * I_3 \end{bmatrix}$$

Mit diesem Verfahren gelingt es, die Genauigkeit eines bereits kalibrierten Polarimeters zu verbessern.

Nach [Noé, R., DE 100 23 708 A 1] wird die Instrumentenmatrix eines Polarimeters gefunden, indem sehr viele, gleichverteilte Polarisationszustände für die Kalibrierung verwendet werden. Die Kalibrierung beruht auf der Korrelation von sehr vielen gleichverteilten Polarisationen, für die eine Korrelationsmatrix bekannt ist.

**Nachteile der bisher bekannten Kalibriermethoden**

Die Kalibriermethode nach [Assam, siehe Zitat vorher] benötigt exakt bekannte Eingangspolarisationen. Diese werden von einem deterministischen Polarisationssteller, z.B. bestehend aus einem drehbaren Polarisator sowie einer drehbaren λ/4 und einer drehbaren λ/2 Wellenplatte, erzeugt. Die Genauigkeit wird dabei von mechanischen Fehlern der Drehvorrichtungen, von nicht perfekten optischen Elementen und von möglichen Fehlern der optischen Kopplung zwischen SOP-Generator und Polarimeter begrenzt. Ein besonderes Problem ist die genaue Bestimmung der Verzögerung der eingesetzten Wellenplatten.

Das Polarimeter erfaßt die vier Detektorsignale bei den vorgegebenen Kalibrier-Polarisationszuständen. Mit diesen Werten wird die Kalibriermatix bestimmt und das Polarimeter erfüllt damit bei genau diesen Werten eindeutig die Vorgaben für SOP, DOP und Leistung.

Gewöhnlich zeigt das Polarimeter aber bei allen anderen Polarisationen Meßfehler, die am deutlichsten in einem abweichenden Polarisationsgrad sichtbar werden. Ursache dafür ist, dass die vier Kalibrier-Polarisationszustände nicht genügend genau gekannt waren und die Detektorsignale nicht präzise genug gemessen wurden.

Die Methode für ein geeichtes Nachkalibrieren eines Polarimeters nach [Heffner] verwendet den Ansatz, wonach das kalibrierte Polarimeter bei allen angelegten Polarisationen mit DOP=1 auch DOP=1 anzeigen muß. Die Grenzen dieses Verfahrens liegen in der Einfachheit der Korrekturwerte. Die drei Faktoren $c_1, c_2$ und $c_3$ können zwar den Betrag der Detektorströme korrigieren, nicht aber die Richtung der Polarisationen, bei denen die Detektorströme $I_1, I_2$ und $I_3$ ihr Maximum bzw. Minimum erreichen.

Polarimeter bei denen die Polarisationen, die zu einem maximalen Detektorstrom führen, von den Polarisationen der Grundkalibrierung abweichen, können auf diese Weise nur sehr unvollkommen korrigiert werden. Einflüsse von Polarisatoren, deren Transmissionsrichtung instabil ist, oder Wellenplatten, deren Verzögerung wellenlängenabhängig ist, können auf diese Weise nicht korrigiert werden.

Das Verfahren nach [Noé] erfordert die Generierung einer sehr großen Anzahl definierter Polarisationszustände. Die dazu notwendigen Einrichtungen sind aufwendig. Nachteilig ist auch die sehr lange Meßzeit, die für sehr viele Polarisationsmessungen (Größenordnung 200.000) benötigt wird.

**Darstellung der Erfindung**

Ein Polarimeter, welches mit Hilfe von festen Polarisations-Normalen kalibriert wurde, zeigt immer Meßfehler, weil die Polarisationen, die zur Kalibrierung verwendet werden, fehlerhaft waren. Die Fehler des Polarimeters zeigen sich am deutlichsten in der Anzeige des Polarisationsgrades DOP. Ordnet man vor das zu überprüfende Polarimeter einen idealen Polarisationstransformator an, der zwar den Polaristionszustand, nicht aber den Polarisationsgrad ändert, so ist die Variation des angezeigten Polarisationsgrades ein Maß für die Güte der Kalibrierung des Polarimeters.

Ziel der Erfindung ist es, ein Verfahren anzugeben, mit dem eine Korrekturmatrix für ein Polarimeter ermittelt werden kann, die weitreichende Verbesserungen der Kalibrierung eines Polarimeters ermöglicht.

Hierzu ist erfindungsgemäß vorgesehen ein Verfahren zur Kalibrierung eines Polarimeters, wobei das Polarimeter mehrere Detektoren aufweist, deren Detektorströme mit den zu messenden Stokes-Parametern jeweils in Beziehung stehen, folgende Schritte umfassend:

a) Einspeisen von mehreren verschiedenen Eingangspolarisationen mit jeweils dem gleichen Polarisationsgrad und gleicher oder bekannter Leistung in das zu kalibrierende Polarimeter;

b) Erfassen der Detektorströme bei mehreren verschiedenen Kalibrier-Polarisationen, die jeweils eine der mehreren Eingangspolarisationen darstellen;

c) Erfassen der Detektorströme bei mindestens einer Hilfspolarisation, die die von den Kalibrierungs polarisationen unabhängig ist und ebenfalls eine der mehreren Eingangspolarisationen darstellt;

d) Aufstellung einer Instrumentenmatrix in Abhängigkeit von Stokes-Parametern, die auf den in Schritt b) erfassten Detektorströmen der mehreren Kalibrier-Polarisationen basieren, unter Berücksichtigung der bekannten Leistungen, zumindest wenn sie nicht gleich sind, wobei bei der Aufstellung der Instrumentenmatrix in Schritt d) einer oder mehrere Stokes-Parameter mindestens einer der Kalibrier-Polarisationen aus Schritt b) mit einem Korrektur-Parameter als Variable dargestellt wird und der Wert des Korrektur-Parameters durch eine Minimierung einer Fehlergröße aus den Abweichungen der Polarisierungsgrade der mehreren Eingangspolarisotionen des Polarimeters unter Verwendung der Hilfspolarisation ermittelt wird.

Dazu wird neben den mehreren, insbesondere vier Polarisationszuständen, bei denen die Grundkalibrierung erfolgt, mindestens ein weiterer Hilfspolarisationszustand bereitgestellt. Bei mehreren sollten diese Hilfs-Polarisationen möglichst gleichmäßig über die Poincaré-Kugel verteilt sein. Neben den vier Polarisationen, die zu einer Standard-Kalibrierung benötigt werden (beispielsweise H, 45°, V und R) werden vorteilhafterweise zum Beispiel noch L und -45° sowie acht weitere elliptische Polarisationen eingeführt: (Azimuth/Elliptizität) = (22.5°/±17.6°) (67.5°/±17.6°) (-67.5°/±17.6°) (-22.5°/±17.6°).

Die Detektorsignale werden damit für die sechs oberen Grenzwerte der Stokes-Parameter ($s_1 = \pm1$, $s_2 = \pm1$ und $s_3 = \pm1$), sowie an den acht elliptischen Polarisationen in der Mitte aller Kugel-Segmente, die durch die Ebenen $s_1 = 0$, $s_2 = 0$ und $s_3 = 0$ gebildet werden, bestimmt.

Insgesamt stehen also 14 Strom-Vektoren ($I_{0,i}$, $I_{1,i}$, $I_{2,i}$, $I_{3,i}$) zur Verfügung (der Index i kennzeichnet die Polarisation), für die nach einer exakten Kalibrierung gelten muß: Die berechnete Leistung ist konstant und der berechnete Polarisationsgrad DOP ist 100%.

| Polarisations-zustand | Azimuth $\theta$ (Grad) | Elliptizität $\varepsilon$ (Grad) | $s_1 = S_1/S_0$ | $s_2 = S_2/S_0$ | $S_3 = S_3/S_0$ |
|---|---|---|---|---|---|
| H | 0 | 0 | 1 | 0 | 0 |
| 45° | 45 | 0 | 0 | 1 | 0 |
| V | 90 | 0 | -1 | 0 | 0 |
| R | - | 45 | 0 | 0 | 1 |
| L | - | -45 | 0 | 0 | -1 |
| -45° | -45 | 0 | 0 | -1 | 0 |
| 22.5° R | 22.5 | 17.63 | $\frac{1}{\sqrt{3}}$ | $\frac{1}{\sqrt{3}}$ | $\frac{1}{\sqrt{3}}$ |
| 22.5° L | 22.5 | -17.63 | $\frac{1}{\sqrt{3}}$ | $\frac{1}{\sqrt{3}}$ | $-\frac{1}{\sqrt{3}}$ |
| 67.5° R | 67.5 | 17.63 | $-\frac{1}{\sqrt{3}}$ | $\frac{1}{\sqrt{3}}$ | $\frac{1}{\sqrt{3}}$ |
| 67.5° L | 67.5 | -17.63 | $-\frac{1}{\sqrt{3}}$ | $\frac{1}{\sqrt{3}}$ | $-\frac{1}{\sqrt{3}}$ |
| -67.5° R | -67.5 | 17.63 | $-\frac{1}{\sqrt{3}}$ | $-\frac{1}{\sqrt{3}}$ | $\frac{1}{\sqrt{3}}$ |
| -67.5° L | -67.5 | -17.63 | $-\frac{1}{\sqrt{3}}$ | $-\frac{1}{\sqrt{3}}$ | $-\frac{1}{\sqrt{3}}$ |
| -22.5° R | -22.5 | 17.63 | $\frac{1}{\sqrt{3}}$ | $-\frac{1}{\sqrt{3}}$ | $\frac{1}{\sqrt{3}}$ |

(fortgesetzt)

| Polarisations-zustand | Azimuth $\theta$ (Grad) | Elliptizität $\varepsilon$ (Grad) | $s_1=S_1/S_0$ | $s_2=S_2/S_0$ | $S_3=S_3/S_0$ |
|---|---|---|---|---|---|
| -22.5° L | -22.5 | -17.63 | $\frac{1}{\sqrt{3}}$ | $-\frac{1}{\sqrt{3}}$ | $-\frac{1}{\sqrt{3}}$ |

Figur 5 zeigt die Kalibrierpunkte (H, 45°, V, R) mit schwarzen Punkten und die zehn weiteren Polarisationszustände mit grauen Punkten.

Die Beschränkung auf die hier genannten Polarisationszustände ist nicht zwingend. Ebenso können andere, beliebige Polarisationen als Hilfs-Polarisationen verwendet werden. Es kommt nicht auf deren exakte Lage an, sondern nur darauf, dass alle Bereiche der Poincaré-Kugel möglichst überdeckt sind.

Die erfindungsgemäße Kalibriermethode geht von der "Four Point Calibration" nach [Azzam] aus, berücksichtigt aber, dass die vier Kalibrier-Polarisationszustände fehlerhaft, also nicht exakt bekannt sind. Es werden daher Korrektur-Parameter vorgesehen, um die Mess- und Einstellfehler der zur Kalibrierung verwendeten Polarisationszustände zu berücksichtigen.

Erfindungsgemäß werden in einem iterativen Verfahren die Korrektur-Parameter ermittelt. Damit sind automatisch auch die vier Polarisationszustände, die beim ersten Schritt der Kalibrierung, also der Kalibrierung gemäß dem Stand der Technik vorgelegen haben, genauer bekannt.

Das erfindungsgemäß vorgeschlagene Kalibrierverfahren hat das Ziel, den berechneten Polarisationsgrad bei allen aufgenommenen Polarisationszuständen auf einen gemeinsamen Wert des Polarisationsgrades von 100% (DOP = 1) zu bringen. Die korrekte Kalibrierung ist dann erreicht, wenn das Polarimeter für beliebige Eingangspolarisationen, die 100% polarisiert an den Eingang des Polarimeters angelegt werden, immer einen Polarisationsgrad von DOP=1 anzeigt. Der Fehler bei der Anzeige des Polarisationsgrades eines Polarimeters ist immer ein Maß der Güte der Kalibrierung des Polarimeters.

Als Optimierungskriterium wird erfindungsgemäß eingeführt:

$$DOP_{diff} = \sqrt{\frac{1}{n}\sum_{i=1}^{n}\left(DOP_i - 1\right)^2}$$

$DOP_{diff}$ ist der mittlere quadratische Fehler, den alle im oben angegebenen Fall von vierzehn Strom-Vektoren mit der jeweils aktuellen Kalibriermatrix liefern. Für ein ideales Polarimeter gilt $DOP_{diff} = 0$. Der Laufindex i kann erst bei i=5 starten, denn die vier KalibrierPolarisationen gemäß Standard-Kalibrierung (bei H, 45°, V und R) liefern immer DOP=1, da dies eine Vorgabe bei der Ermittlung der Instrumentenmatrix war.

Durch eine iterative mathematische Änderung von drei der vier Kalibrierzustände wird fortlaufend der Polarisationsgrades DOP bei den weiteren Hilfspolarisationszuständen berechnet und so eine Optimierung auf das Kriterium $DOP_{diff} = 0$ herbeigeführt.

**Ausführungsformen von Kalibrieranordnungen zur Durchführung des erfindungsgemäßen Verfahrens**

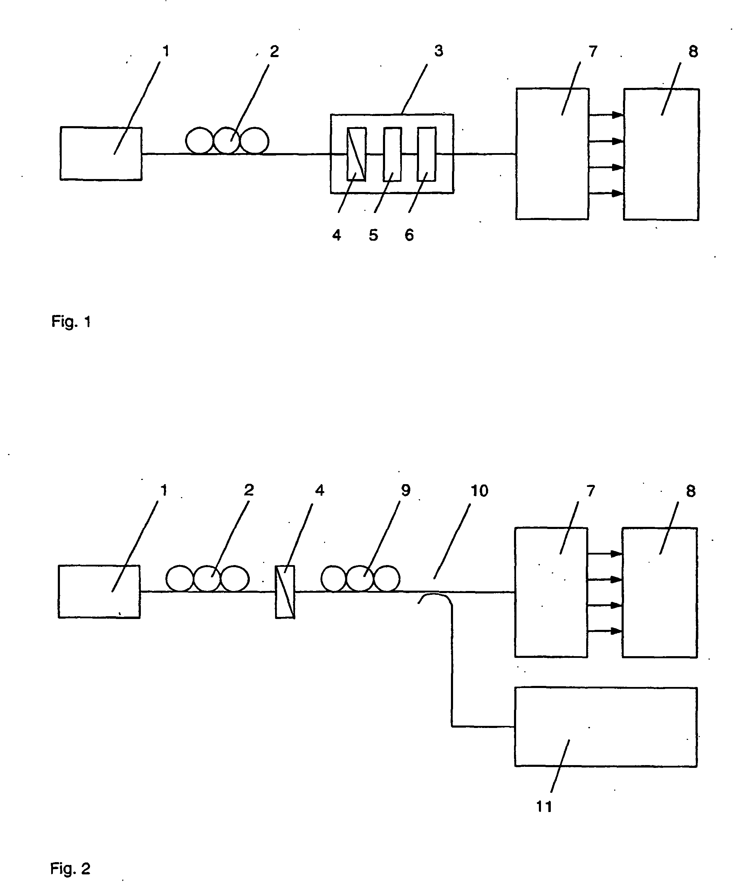

Figur 1 zeigt die Anordnung zur Kalibrierung eines Polarimeters. Die Polarisation eines Lasers (1) wird durch einen deterministischen Polarisationssteller (3) bestehend aus drehbarem Polarisator (4), drehbarem $\lambda/4$ Wellenplatte (5) und drehbarem $\lambda/2$ Wellenplatte (6) in der Polarisation einstellbar. Der davor angeordnete manuelle Polarisationssteller (2) hat die Aufgabe, die Polarisation vor dem Polarisator (4) so einzustellen, dass minimale Dämpfung auftritt.

Der Polarisator (4) garantiert einen Polarisationsgrad von DOP=1 (100%). Der Einstellwinkel der $\lambda/4$ Wellen-platte (5) beeinflusst die Elliptizität und der Einstellwinkel der $\lambda/2$ Wellenplatte (6) beeinflusst den Azimuth der Polarisation am Ausgang des deterministischen Polarisationssteller (3). Da die Polarisationsparameter deterministisch einstellbar sind, ist damit eine absolute Kalibrierung möglich. Die Kalibrierung bezieht sich auf das Koordinatensystem des Polarisationsstellers (3).

Die so erzeugten Polarisationen mit DOP=1 gelangen an den Eingang des zu kalibrierenden Polarimeters (7) mit der Auswerte- und Anzeigeeinheit (8).

Mit einer Anordnung nach Figur 2 kann ein Polarimeter mit einem Vergleichs-Polarimeter kalibriert werden. Das Licht des Lasers wird im Polarisator (4) zu 100% polarisiert. Der davor angeordnete manuelle Polarisationssteller (2) sorgt für minimale Dämpfung durch den Polarisator (4).

Mit Hilfe des 2. manuellen Polarisationsstellers (9) können alle möglichen Polarisarionszustände unter Beibehaltung des Polarisationsgrades von DOP=1 erzeugt werden. Ein Koppler (10) teilt die optische Leistung in zwei Anteile auf, einer wird dem zu kalibrierenden Polarimeter (7) und einer dem Vergleichs-Polarimeter (11) zur Verfügung gestellt.

Eine absolute Kalibrierung kann nur auf die Bezugsebene des Vergleichs-Polarimeters (11) erreicht werden. Falls es sich bei dem Koppler (10) um eine faseroptische Einrichtung handelt, ist eine absolute Kalibrierung erreichbar, wenn die am Aufbau beteiligten Fasern keiner Bewegung ausgesetzt sind. Falls die Faser doch bewegt wurde, bewirkt jede Änderung der Eingangspolarisation sowohl im zu kalibrierenden, als auch im Vergleichspolarimeter die gleichen Änderungen der Anzeige, nicht allerdings die Anzeige des gleichen Absolutwertes.

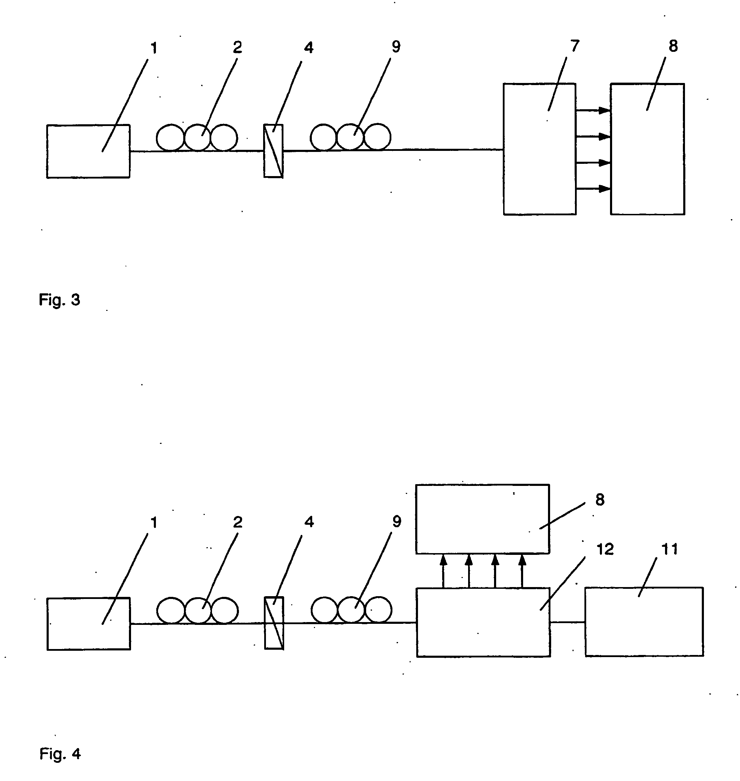

Mit einer Anordnung nach Fig. 3 erfolgt die Kalibrierung ohne die Berücksichtigung des äußeren Bezugssystems. Es wird eine genaue relative Kalibrierung erreicht.

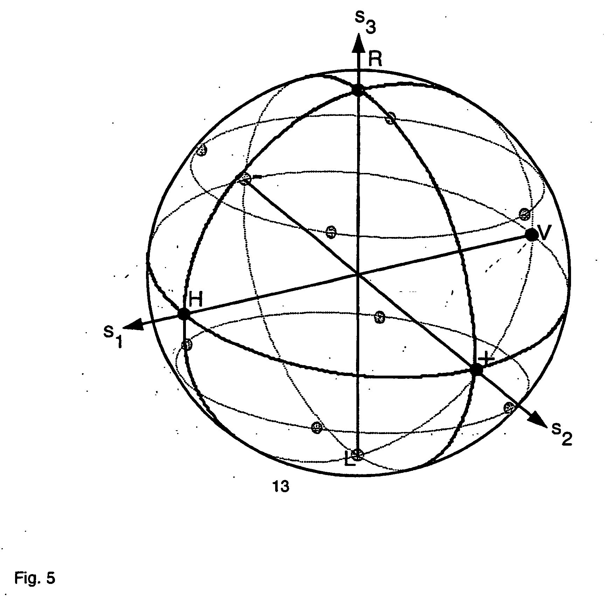

Mit einer Anordnung nach Figur 4 kann auch ein Inline-Faser-Polarimeters (12) kalibriert werden. An den Ausgang des Inline-Faser-Polarimeters kann direkt ein VergleichsPolarimeter (11) angeschlossen werden. Die Kalibrierung erfolgt hier auf das Bezugssystem des Vergleichs-Polarimeters.

In Figur 5 ist beispielhaft die Lage der 4 Kalibrier-Polarisationen (H, 45°, V und R) (schwarz) und die Verteilung von 10 weiteren Hilfs-Polarisationen (grau) auf der Poincaré-Kugel dargestellt.

**Darstellung des Verfahrens an Ausführungsbeispielen**

In dem ersten Ausführungsbeispiel werden zur Kalibrierung beispielhaft die Eingangspolarisationen H, 45°, V und R verwendet. Dabei wird angenommen, daß die Polarisation H exakt vorliegt und die Polarisation 45° tatsächlich linear ist. Diese Definition erlaubt alle nötigen Freiheitsgrade für die Verschiebung der Kalibrier-Polarisationen. Trotzdem geht der Bezug zu den absolut vorgebebenen Polarisationen nicht verloren.

Im Ergebnis der iterativen Verschiebung erhält man die Instrumentenmatrix A und deren inverse Matrix B eines sehr genau kalibrierten Polarimeters, welches nur Abweichungen zu den vorgegebenen Kalibrier-Polarisationen 45°, V und R zeigt. Die Polarisation H und die Linearität der Polarisation 45° bleiben unberührt, d.h. das Polarimeter misst exakt die Vorgabewerte.

Die Standard-Kalibrierung nach [Azzam] geht von drei linearen Polarisationen (H, 45°, V) und einer zirkularen Polarisation (R) aus:

$$S = \begin{bmatrix} 1 & 1 & 1 & 1 \\ 1 & 0 & -1 & 0 \\ 0 & 1 & 0 & 0 \\ 0 & 0 & 0 & 1 \end{bmatrix}.$$

Die Reihenfolge in den Spalten wurde gewählt zu (H, 45°, V, R). Es wird vorausgesetzt, dass die vier Kalibrierpolarisationen mit einer konstanten Leistung vorliegen. Ohne Einschränkung der Allgemeinheit wird die Gesamtleistung zu $S_0=1$ normiert.

Außerdem gilt für jeden Stokes-Vektor:

$$S_0^2 = S_1^2 + S_2^2 + S_3^2$$

was gleichbedeutend mit der Aussage DOP=1 (DOP=1) ist.

Ein monochromatischer Laser liefert nahezu DOP=1, ein nachgeschalteter Polarisator mit einem hohen Extinktionsverhältnis (60 dB) führt sicher zu einem DOP=1. Ein Polarisationssteller, der eine polarisationsabhängige Dämpfung aufweist, kann dadurch korrigiert werden, dass die Leistung an seinem Ausgang mit einem Leistungsmesser überwacht wird.

Der Fehler bei der Kalibrierung besteht darin, nicht genau zu wissen (oder messen zu können) welche vier Polarisationen vorliegen. Diese Unsicherheit kann nachträglich eliminiert werden. Es wird schrittweise nach den vier Polarisationen gesucht, die tatsächlich bei der Kalibrierung vorhanden sind, also allgemein:

$$S = \begin{bmatrix} 1 & 1 & 1 & 1 \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

wobei der zweite Index kennzeichnet den Index der Kalibrier-Polarisation (0...3).

Gestartet wird die schrittweise Verbesserung mit dem "Verschieben" einer Polarisation. Die Leistung bleibt konstant 1 der DOP bleibt unverändert bei 100%. Die Kalibrier-Polarisation H wird als exakt angenommen, sie wird nicht verändert.

$$\begin{bmatrix} S_{0,0} \\ S_{1,0} \\ S_{2,0} \\ S_{3,0} \end{bmatrix} = \begin{bmatrix} 1 \\ 1 \\ 0 \\ 0 \end{bmatrix}$$

Die Kalibrier-Polarisation 45° wird als linear vorausgesetzt. Der Azimuth-Winkel könnte jedoch schon fehlerhaft sein und wird daher korrigiert:

$$\begin{bmatrix} S_{0,1} \\ S_{1,1} \\ S_{2,1} \\ S_{3,1} \end{bmatrix} = \begin{bmatrix} 1 \\ k_0 \\ \sqrt{1-k_0{}^2} \\ 0 \end{bmatrix}$$

Dabei ist $k_0$ eine Korrekturgröße, die eine geringfügige Abweichung im Azimuth-Winkel zu lässt. Die Bedingung DOP=1 (DOP=1) bleibt jedoch für alle $k_0$ gewahrt.

Die Kalibrier-Polarisation V kann Abweichungen im Azimuth und eine Elliptizität ungleich 0 aufweisen und wird beschrieben mit:

$$\begin{bmatrix} S_{0,2} \\ S_{1,2} \\ S_{2,2} \\ S_{3,2} \end{bmatrix} = \begin{bmatrix} 1 \\ \sqrt{1-k_1{}^2-k_2{}^2} \\ k_1 \\ k_2 \end{bmatrix}$$

Die Kalibrier-Polarisation R kann Abweichungen von ihrem idealen Elliptizitätswinkel 45° aufweisen und der Azimuthwinkel wird frei wählbar.

$$\begin{bmatrix} S_{0,3} \\ S_{1,3} \\ S_{2,3} \\ S_{3,3} \end{bmatrix} = \begin{bmatrix} 1 \\ k_3 \\ k_4 \\ \sqrt{1 - k_3{}^2 - k_4{}^2} \end{bmatrix}$$

Die komplette S-Matrix ist demzufolge:

$$S = \begin{bmatrix} 1 & 1 & 1 & 1 \\ 1 & k_0 & -\sqrt{1 - k_1{}^2 - k_2{}^2} & k_3 \\ 0 & \sqrt{1 - k_0{}^2} & k_1 & k_4 \\ 0 & 0 & k_2 & \sqrt{1 - k_3{}^2 - k_4{}^2} \end{bmatrix}$$

Mit den 5 Korrektur-Parametern $k_0$ bis $k_4$ erhält man 5 Freiheitsgrade, bei deren Manipulation sich die Präzision der Polarimeters verbessern lässt.

Die Kalibrierung wird durchgeführt, d.h. die Instrumentenmatrix wird berechnet mit:

$$A = I * S^{-1}$$

$$\begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

anschließend invertiert

$$B = A^{-1} \quad ; \quad \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}^{-1}$$

so dass folglich das kalibrierte Polarimeter die Stokes-Parameter, d.h. Polarisationen, DOP und Leistung aus dem Strom-Vektor ($I_0$, $I_1$, $I_2$, $I_3$) bestimmen kann.

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Mit der erhaltenen Kalibriermatrix B wird der Polarisationsgrad DOP$_i$ für alle 14 Polarisationen berechnet.

$$DOP_i = \frac{\sqrt{S_{1,i}^2 + S_{2,i}^2 + S_{3,i}^2}}{S_{0,i}}$$

Damit wird die Abweichung aller Hilfs-Polarisationen vom idealen Wert DOP=1 ermittelt.

$$DOP_{diff} = \sqrt{\frac{1}{n} \sum_{i=1}^{n} (DOP_i - 1)^2}$$

Die Größe DOP$_{diff}$ gilt es, mittels Manipulation der Korrektur-Parameter $k_0$ bis $k_4$ zu minimieren. Nacheinander werden die Korrektur-Parameter $k_0$ bis $k_4$ nach einem Trial-and-Error-Verfahren manipuliert und jeweils das Gütekriterium DOP$_{diff}$ ermittelt. Mit der Änderung eines Korrektur-Parameters wird die damit verknüpfte Polarisation verschoben, P=1 und DOP=1 werden jedoch beibehalten.

Mit dem verschobenen Stokes-Vektor wird erneut eine Kalibrierrechnung durchgeführt. Abhängig vom Erfolg (wie hat sich DOP$_{diff}$ verändert) wird weiter verfahren. Hat sich DOP$_{diff}$ verkleinert so wird die Änderung des Korrektur-Parameters beibehalten und der nächste Verschiebung durchgeführt. Hat sich dagegen DOP$_{diff}$ vergrößert so wird die letzte Änderung verworfen und die Richtung der Verschiebung geändert. Wenn dies auch zu keiner Verbesserung führt, wird zum nächsten Korrektur-Parameter übergegangen.

Sind mit der anfangs gewählten Schrittweite keine weiteren Verbesserungen für die Korrektur-Parameter $k_0$ bis $k_4$ mehr möglich, dann wird die Schrittweite verkleinert, z.B. halbiert.

Das Ziel ist:        $DOP_{diff} \rightarrow Min$

Als Resultat erhält man iterativ die tatsächlichen Polarisationszustände bei denen die Kalibrierpunkte (45°, V und R) aufgenommen wurden.

Die Voraussetzung, dass die Polarisation H fehlerfrei und die Polarisation 45° tatsächlich linear ist, muß nicht unbedingt zutreffen. Es können auch alle vier vorgegebenen Polarisationen fehlerhaft sein. Es können acht statt fünf Korrektur-Parameter vorgesehen werden. Die hinzugenommenen Freiheitsgrade sind nicht notwendig sondern vergrößert nur Aufwand und Rechenzeit der Kalibrierung.

Sollten auch die Polarisationen H und 45° fehlerhaft gewesen sein, so erhält das Polarimeter keine absolute Kalibrierung, sondern nur eine relative Kalibrierung. Dazu gehört auch die Konstanz des Polarisationsgrades über alle Polarisationszustände.

Beispielhaft kann der iterative Bestimmung der Korrektur-Parameter nach dem folgenden Schema ablaufen:

Start

Initialisierung
$k_i = 0$, für alle $i=0...4$
$DOP_{diff, Min}$ berechnen
Richtung = 1
Inkrement = 0.1

$k_i := k_i + Inkrement * Richtung$

Berechne Instrumentenmatrix A
Berechne $B = A^{-1}$

Berechne $DOP_{diff}$

$DOP_{diff} < DOP_{diff,Min}$ ?  → ja → $DOP_{diff,Min} = DOP_{diff}$

nein

Letzte Änderung $k_i$ zurück

Richtung für i schon geändert?  → nein → Richtung := - Richtung

ja

Inkrement bringt für ein $i=0...4$ noch Erfolg?  → ja → nächstes i

nein

Inkrement := Inkrement /2

Inkrement < 0.000001?  → nein

ja

Ende

In einem 2. Ausführungsbeispiel soll nun beschrieben werden, wie ein beliebiges 4-Detektor-Polarimeter mittels zufälligen Polarisationsvorgaben eine exakte relative Kalibrierung gemäß dem vorgeschlagenen Verfahren erhalten kann. Relativ bedeutet, dass die ermittelten Meßwerte Leistung und DOP stimmen, der absolute Polarisationszustand bis auf eine einfache Polarisationstransformation exakt bekannt ist. In einem abschließenden Schritt kann der Bezug zu einer absoluten Kalibrierebene recht einfach hergestellt werden.

Die Kalibrierung eines Polarimeters mittels einiger zufälliger Polarisationsproben beinhaltet folgende Schritte:

1. Schritt: Erzeugung und Speicherung von Polarisationszuständen

Es werden von einem Polarisationssteller (z.B. auch von einem Polarisations-Scrambler) nacheinander verschiedene Polarisationszustände erzeugt, die alle mit der normierten Leistung 1 und dem Polarisationsgrad DOP=1 (DOP = 1) vorliegen. Diese Polarisationszustände, die die oben erwähnten

Kalibrier- und Hilfspolarisationen darstellen, sollten über die Poincaré-Kugel nahezu gleichverteilt sein. Eine brauchbare Anzahl an Polarisationen liegt bereits mit 10...50 unterschiedlichen Polarisationszuständen vor. Bei der Aufnahme der Polarisationsproben ist zu beachten, dass nicht große Bereiche der Poincaré-Kugel ausgespart werden, eine ungefähre Gleichverteilung ist anzustreben.

Entscheidend für die Genauigkeit des zu kalibrierenden Polarimeters ist die Konstanz des DOP und der Leistung aller generierten Polarisationszustände. Deshalb sollten die Polarisationen von einem Polarisationssteller 9 (vgl Fig. 3) erzeugt werden, der selbst keine PDL aufweist und bei dem die Polarisationsänderungen möglichst ohne Leistungsschwankungen verbunden sind.

Eine sehr einfache und perfekte Variante eines solchen Polarisationsstellers (9) stellt die Faser am Eingang des Polarimeters selbst dar. Mittels maßvoller Bewegung der Faser entstehen durch Biegung und Torsion Doppelbrechungseffekte, die zu verschiedensten Polarisation am Faserende führen. Wird dabei ein Mindestradius der Faser (ca. 4 cm) nicht unterschritten, treten keine messbaren Leistungsschwankungen (<0,001 dB) auf. Auf diese Weise kann das Polarimeter auch bezüglich seiner relativen Leistungsanzeige (Stokes-Parameter S0) extrem genau kalibriert werden, und das ohne technische Hilfsmittel.

Nach einer solchen Kalibrierung mit extrem konstanter Leistung ist das Polarimeter in der Lage, die optische Leistung polarisationsunabhängig zu messen. Das ist die wesentliche Eigenschaft eines Low PDR Powermeters (PDR = polarization dependent response). Die PDR eines derart kalibrierten Polarimeters kann wesentlich geringer sein als die PDR eines gewöhnlichen Powermeters mit einer einfachen Fotodiode. Besitzt das zu kalibrierende Polarimeter einen optischen Eingang, der durch Faserstecker (gerade = PC oder schräg = APC)

eine unvermeidbare geringe polarisationsabhängige Dämpfung (PDL) aufweist, dann ist diese Vorgehensweise trotzdem anwendbar. Statt der Faser zwischen der Steckverbindung und dem Polarimeter wird die Faser vor der Steckverbindung bewegt. Dabei kommt es zu geringen Leistungsschwankungen am Polarimetereingang entsprechend der PDL der Steckverbindung, die eine exakte Kalibrierung des Polarimeters behindern.

Definiert man aber den Polarimetereingang an die Stelle vor der PDL-behafteten Steckverbindung, dann gehört die PDL der Steckverbindung bereits zu den internen Eigenschaften des Polarimeters. Damit ist eine exakte low-PDR Kalibrierung wieder möglich. Der Bezugspunkt für die Leistungsmessung ist immer die Stelle der Faser, die die Polarisationsschwankungen erzeugt, also der Polarisationssteller. Störende PDL-behaftete Elemente im Messaufbau können auf diese Weise vollständig eliminiert werden.

2. Schritt: Suche nach geeigneten Polarisationszuständen für die Kalibrierung

Aus der Fülle von Strom-Vektoren $[I_0, I_1, I_2, I_3]^T$, die bei den entsprechenden Stokes-Vektoren $[S_0, S_1, S_2, S_3]^T$ gemessen wurden, werden diejenige, insbesondere diejenigen vier herausgesucht, die Polarisationszuständen entsprechen, die möglichst weit auf der Poincaré-Kugel auseinanderliegen. Dies kann dadurch erreicht werden, dass die Stromvektoren ausgesucht werden, bei denen jeweils ein maximaler Strom für $I_0$, $I_1$, $I_2$ bzw. $I_3$ gemessen wird. Die vier zugeordneten Polarisationen liegen damit relativ dicht an den Polarisationen, bei denen die Ströme $I_0$, $I_1$, $I_2$ und $I_3$ tatsächlich ihr Maximum erreichen. Bei einem gut bestimmten Polarimeter liegen diese vier Polarisationen auf der Poincaré-Kugel weit auseinander. Durch den konstruktiven Aufbau des Polarimeters ist außerdem näherungsweise bekannt, bei welchen vier Polarisationen diese Maxima auftreten.

3 Schritt: Näherungsweise Aufstellen einer ersten Instrumentenmatrix A

Das Polarimeter reagiert bei Anlegen eines Stokes-Vektors S mit einem Strom-Vektor I. Das Verhalten ist vollständig durch die Instrumentenmatrix A bestimmt.

$$I = A * S \quad ; \quad \begin{bmatrix} I_0 \\ I_1 \\ I_2 \\ I_3 \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} * \begin{bmatrix} S_0 \\ S_1 \\ S_2 \\ S_3 \end{bmatrix}$$

Die Instrumentenmatrix A wird wie folgt gefunden:

Die vier angenommenen Stokes-Vektoren, bei denen die Maxima der Detektorströme auftreten, werden in den Spalten der Matrix S abgelegt. Dies kann aufgrund von konstruktiven Merkmalen für jeden Polarimeter-Typ angegeben werden.

1. Index: Stokes-Parameter
2. Index: Index der Polarisation

$$S = \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

Zu jeder der unter den Proben herausgesuchten vier Eingangspolarisationen sind die vier Detektorströme bekannt. Diese werden in die Spalten der Matrix I eingetragen.

$$I = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix}$$

Die Instrumentenmatrix A ergibt sich zu:

$$A = I * S^{-1}$$

$$\begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} = \begin{bmatrix} I_{0,0} & I_{0,1} & I_{0,2} & I_{0,3} \\ I_{1,0} & I_{1,1} & I_{1,2} & I_{1,3} \\ I_{2,0} & I_{2,1} & I_{2,2} & I_{2,3} \\ I_{3,0} & I_{3,1} & I_{3,2} & I_{3,3} \end{bmatrix} * \begin{bmatrix} S_{0,0} & S_{0,1} & S_{0,2} & S_{0,3} \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}^{-1}$$

Ohne Einschränkung der Allgemeinheit wird die Gesamtleistung wird auf $S_0 = 1$ normiert.

$$S = \begin{bmatrix} 1 & 1 & 1 & 1 \\ S_{1,0} & S_{1,1} & S_{1,2} & S_{1,3} \\ S_{2,0} & S_{2,1} & S_{2,2} & S_{2,3} \\ S_{3,0} & S_{3,1} & S_{3,2} & S_{3,3} \end{bmatrix}$$

Beispiel:

Ohne Einschränkung der Allgemeinheit soll ein Polarimeter mit den Maxima-Polarisationen (Azimuth / Elliptizität) = (-22.5°/0°), (22.5°/0°), (90°/22.5°) und (90°/-22.5°) angenommen werden. Diese vier Polarisationen liegen sehr weit auf der Poincaré-Kugel auseinander und bilden nahezu ein Tetraeder mit dem maximal möglichen Volumen. Unter diesen Bedingungen hat die Instrumentenmatrix des Polarimeters eine große Determinante, d.h. die Polarisations-Meßwerte sind unsensibel gegenüber möglichen Meßfehlern.

Die vier Polarisationen bilden die S Matrix:

$$S = \begin{bmatrix} 1 & 1 & 1 & 1 \\ \dfrac{1}{\sqrt{2}} & \dfrac{1}{\sqrt{2}} & -\dfrac{1}{\sqrt{2}} & -\dfrac{1}{\sqrt{2}} \\ -\dfrac{1}{\sqrt{2}} & \dfrac{1}{\sqrt{2}} & 0 & 0 \\ 0 & 0 & \dfrac{1}{\sqrt{2}} & -\dfrac{1}{\sqrt{2}} \end{bmatrix}$$

4. Schritt: Einfügen von Korrektur-Parametern

Da die Polarisationen, bei denen die maximalen Detektorströme auftreten, durch das Scramblen der Polarisation nur sehr grob bekannt sind, kommen Korrektur-Parameter zum Einsatz, die bei richtiger Wahl zu den tatsächlichen Polarisationen führen.

Die Hinzufügung von Korrektur-Parametern bedeutet ein bildliches Verschieben der betreffenden Polarisation auf der Poincaré-Kugel. Daher bleibt die Leistung konstant P=1 und der Polarisationsgrad unverändert bei DOP=1. Die Stokes-Parameter $S_1$, $S_2$ und $S_3$ sind somit nicht mehr frei wählbar, sondern folgen der Beziehung:

$$S_1{}^2 + S_2{}^2 + S_3{}^2 = 1$$

Mit Veränderung von zwei Stokes-Parametern ergibt sich der dritte zwangsläufig nach diesem formelmäßigen Zusammenhang. Eine Mehrdeutigkeit durch die freie Wahl des Vorzeichens für den dritten Stokes-Parameter tritt nicht auf, da sich die Polarisationen immer nur um kleine Beträge ändern sollen.

Die Polarisation (-22.5°/0°), bei der der Strom $I_0$ näherungsweise sein Maximum aufweist, wird beschrieben mit:

$$\begin{bmatrix} S_{0,0} \\ S_{1,0} \\ S_{2,0} \\ S_{3,0} \end{bmatrix} = \begin{bmatrix} 1 \\ \dfrac{1}{\sqrt{2}} \\ -\dfrac{1}{\sqrt{2}} \\ 0 \end{bmatrix}$$

Sie wird als exakt angenommen und nicht korrigiert, da es keinen Sinn macht, alle vier Polarisationen zu verschieben.

Die vermeintliche Polarisation (22.5°/0°) wird beschrieben mit:

$$\begin{bmatrix} S_{0,1} \\ S_{1,1} \\ S_{2,1} \\ S_{3,1} \end{bmatrix} = \begin{bmatrix} 1 \\ \dfrac{1}{\sqrt{2}} + k_0 \\ \sqrt{1 - \left( \dfrac{1}{\sqrt{2}} + k_0 \right)^2} \\ 0 \end{bmatrix}$$

Diese Polarisation ist und bleibt linear, durch $k_0$ wird lediglich nur der Azimuth einstellbar.

Die vermeintliche Polarisation (90°/22.5°) wird beschrieben mit:

$$\begin{bmatrix} S_{0,2} \\ S_{1,2} \\ S_{2,2} \\ S_{3,2} \end{bmatrix} = \begin{bmatrix} 1 \\ -\dfrac{1}{\sqrt{2}} + k_1 \\ k_2 \\ \sqrt{1 - \left( -\dfrac{1}{\sqrt{2}} + k_1 \right)^2 - k_2{}^2} \end{bmatrix}$$

Die vermeintliche Polarisation (90°/-22.5°) wird beschrieben mit:

$$\begin{bmatrix} S_{0,3} \\ S_{1,3} \\ S_{2,3} \\ S_{3,3} \end{bmatrix} = \begin{bmatrix} 1 \\ -\dfrac{1}{\sqrt{2}} + k_3 \\ k_4 \\ -\sqrt{1 - \left( -\dfrac{1}{\sqrt{2}} + k_3 \right)^2 - k_4{}^2} \end{bmatrix}$$

Die komplette S-Matrix ist demzufolge:

$$S = \begin{bmatrix} 1 & 1 & 1 & 1 \\ \dfrac{1}{\sqrt{2}} & \dfrac{1}{\sqrt{2}} + k_0 & -\dfrac{1}{\sqrt{2}} + k_1 & -\dfrac{1}{\sqrt{2}} + k_3 \\ -\dfrac{1}{\sqrt{2}} & \sqrt{1 - \left(\dfrac{1}{\sqrt{2}} + k_0\right)^2} & k_2 & k_4 \\ 0 & 0 & \sqrt{1 - \left(-\dfrac{1}{\sqrt{2}} + k_1\right)^2 - k_2^{\,2}} & -\sqrt{1 - \left(-\dfrac{1}{\sqrt{2}} + k_3\right)^2 - k_4^{\,2}} \end{bmatrix}$$

Die Instrumentenmatrix wird mittels

$$A = I * S^{-1}$$

berechnet. Dabei werden zunächst alle Korrektor-Parameter $k_i = 0$ gesetzt.

5. Schritt: Invertieren der Instrumentenmatrix

$$B = A^{-1} \quad ; \quad \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix}^{-1}$$

Das Polarimeter ist damit erstmals in der Lage, einen Strom-Vektor I in den zugehörigen, wenn auch sehr ungenauen Stokes-Vektor S umzuformen.

$$S = B * I \quad ; \quad \begin{bmatrix} S_0 \\ S_1 \\ S_2 \\ S_3 \end{bmatrix} = \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

6. Schritt: Berechnung des Fehlerkriteriums

Für alle n der unter Punkt 1 aufgenommenen Stromvektoren $[I_0, I_1, I_2, I_3]^T$ wird der Polarisationsgrad DOP berechnet.

$$DOP_i = \frac{\sqrt{S_{1,i}^{\,2} + S_{2,i}^{\,2} + S_{3,i}^{\,2}}}{S_{0,i}}$$

Das Fehlerkriterium DOP$_{diff}$ wird aus dem mittleren quadratischen Fehler zu DOP=1 bestimmt.

$$DOP_{diff} = \sqrt{\frac{1}{n} \sum_{i=1}^{n} (DOP_i - 1)^2}$$

7. Schritt: Iterative Minimierung des DOP-Fehlerkriteriums

Diese Fehlergröße DOP$_{diff}$ wird mittels iterativen Verfahren minimiert. Dazu werden nacheinandere die Korrektur-Parameter $k_0$ bis $k_4$ ermittelt. Mit der Änderung eines Korrektur-Parameters wird die damit verknüpfte Polarisation verschoben, P=1 und DOP=1 werden beibehalten.

Ziel ist: $DOP_{diff} \rightarrow Min$

So gelangt man schrittweise zu den tatsächlichen Polarisationen bei denen die vier Strom-Vektoren aufgenommen wurden. Als Ergebnis des iterativen Prozesses erhält man diejenige Kalibriermatrix B, mit der das Fehlerkriterium am kleinsten ist. Die relative Kalibrierung des Polarimeters ist damit beendet.

8. Schritt: Herstellung einer absoluten Kalibrierebene

Um eine absolute Zuordnung zu einer Kalibrier-Ebene herzustellen, werden lediglich zwei verschiedene, bekannte Polarisationen benötigt, die nicht orthogonal sein dürfen. Das Polarimeter ist dann absolut kalibriert, wenn es zwei als absolut vorgegebene, nicht orthogonale Polarisationen richtig anzeigt. Alle anderen Polarisationen werden dann ebenfalls richtig angezeigt.

Zur Ermittelung der zwei Polarisationen für die absolute Kalibrierung werden zwei Varianten vorgeschlagen:

Variante 1: Kalibrierung bezüglich einer äußeren Bezugsebene

Beispielhaft wird die horizontale Polarisation H und eine weitere lineare Polarisation, die etwa bei einem Azimuth von etwa +45° liegt, benutzt. Diese Polarisationen werden durch einen drehbaren Polarisator gewonnen.

Variante 2: Kalibrierung bezüglich einer inneren Bezugsebene

Eine innere Bezugsebene heißt z.B., dass man die Polarisationsrichtung von Polarisatoren oder Wellenplatten des Polarimeters selbst als Bezugspunkt benutzt.

Nach beschriebenem Beispiel sollen die beiden Polarisationen eine Bezugsebene bilden, die zu Maxima bei den Detektorströmen $I_0$ und $I_1$ führen. Die genaue Ermittlung dieser Polarisationen (bezüglich des relativen Bezugssystems) geschieht einfach durch iterative Suche der Maxima der Detektorströme $I_0$ und $I_1$. Dazu wird die bekannte Instrumentenmatrix A benötigt.

$$I = A * S \quad ; \quad \begin{bmatrix} I_0 \\ I_1 \\ I_2 \\ I_3 \end{bmatrix} = \begin{bmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \end{bmatrix} * \begin{bmatrix} S_0 \\ S_1 \\ S_2 \\ S_3 \end{bmatrix}$$

Ein Algorithmus erzeugt alle möglichen Stokes-Vektoren S mit P=1 und DOP=1 in einem Raster, das relativ grob sein kann. Parallel dazu wird der maximale Detektorstrom $I_{0,max}$ ermittelt. Die Suche wird um das gefundene Maximum herum mit feinerem Raster fortgesetzt. Auf diese Weise kann der Stokes-Vektor (die Polarisation), bei der $I_0$=max wird, mit beliebiger Genauigkeit ermittelt werden.

Analog wird mit dem Detektorstrom $I_1$ verfahren. Die beiden Polarisationen sind folglich:

$$\begin{bmatrix} 1 \\ S_1 \\ S_2 \\ S_3 \end{bmatrix}_{0,\max} \quad ; \quad \begin{bmatrix} 1 \\ S_1 \\ S_2 \\ S_3 \end{bmatrix}_{1,\max}$$

Es wird jetzt eine unitäre Transformation gesucht, die P und DOP unberührt läßt, keine PDL beinhaltet, aber eine Rotation der Poincaré-Kugel bewirkt.

Variante 1 liefert zwei vom Polarimeter berechnete Polarisationen, die so transformiert werden müssen, damit sie mit den absoluten Vorgaben übereinstimmen. Variante 2 liefert zwei markante Polarisationen, die Bezug auf den inneren Aufbau des Polarimeters haben. Diese zwei beliebigen Polarisationen sollen ebenso in eine z.B. lineare Bezugsebene transformiert werden.

Die Aufgabe der absoluten Kalibrierung besteht immer in der Transformation von zwei nicht orthogonalen Polarisationen in zwei andere nicht orthogonale Polarisationen. Die Transformation entspricht einer Rotation auf der Poincaré-Kugel.

Gesucht wird die Transformationsmatrix M zwischen beliebigen Polarisationen $SOP_{in}$ und $SOP_{out}$.

$$S_{out} = M * S_{in} \quad ; \quad \begin{bmatrix} S_0 \\ S_1 \\ S_2 \\ S_3 \end{bmatrix}_{out} = \begin{bmatrix} 1 & 0 & 0 & 0 \\ 0 & m_{1,1} & m_{1,2} & m_{1,3} \\ 0 & m_{2,1} & m_{2,2} & m_{2,3} \\ 0 & m_{3,1} & m_{3,2} & m_{3,3} \end{bmatrix} * \begin{bmatrix} S_0 \\ S_1 \\ S_2 \\ S_3 \end{bmatrix}_{in}$$

Wegen der reinen Polarisationstransformation (keine Dämpfung, keine PDL) hat die Matrix m diese vereinfachte Form, wobei die 3x3 Matrix m

$$m = \begin{bmatrix} m_{1,1} & m_{1,2} & m_{1,3} \\ m_{2,1} & m_{2,2} & m_{2,3} \\ m_{3,1} & m_{3,2} & m_{3,3} \end{bmatrix}$$

eine orthogonale Matrix ist mit

$$\text{Det } m = 1$$

Die reduzierte 3x3 Matrix m korrespondiert zwischen den normierten Stokes-Parametern vor der Transformation $(s_1, s_2, s_3)_{in}$ und den normierten Stokes-Parametern nach der Transformation $(s_1, s_2, s_3)_{out}$.

$$\begin{bmatrix} s_1 \\ s_2 \\ s_3 \end{bmatrix}_{out} = \begin{bmatrix} m_{1,1} & m_{1,2} & m_{1,3} \\ m_{2,1} & m_{2,2} & m_{2,3} \\ m_{3,1} & m_{3,2} & m_{3,3} \end{bmatrix} * \begin{bmatrix} s_1 \\ s_2 \\ s_3 \end{bmatrix}_{in}$$

Es sei DOP=1, daher gilt für jeden Vektor $s_1^2 + s_2^2 + s_3^2 = 1$.

Ähnlich der Vier-Punkt-Kalibrierung nach [Azzam] kann hier auf analoge Weise die vollständige 3x3 Matrix m aus jeweils drei Polarisationszuständen vor und drei Polarisationszuständen nach der Transformation bestimmt werden.

$$m = s_{out} * s_{in}^{-1} \quad ; \quad m = \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{out} * \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{in}^{-1}$$

Dabei gibt der 1. Index den Stokes-Parameter, der 2. Index den Index der 3 Polarisationen (1,2,3) an.

Die ersten beiden Polarisationen die zur Übereinstimmung gebracht werden sollen, sind bekannt:

$$\begin{bmatrix} s_{1,1} \\ s_{2,1} \\ s_{3,1} \end{bmatrix}_{in} \quad \text{und} \quad \begin{bmatrix} s_{1,1} \\ s_{2,1} \\ s_{3,1} \end{bmatrix}_{out} .$$

Die zweite Polarisation

$$\begin{bmatrix} s_{1,2} \\ s_{2,2} \\ s_{3,2} \end{bmatrix}_{in}$$

hat auf der Poincaré-Kugel einen Winkelabstand zur 1. gegebenen Polarisation von $\alpha$.

$$\alpha = \arccos\left( \begin{bmatrix} s_{1,1} \\ s_{2,1} \\ s_{3,1} \end{bmatrix}_{in} * \begin{bmatrix} s_{1,2} \\ s_{2,2} \\ s_{3,2} \end{bmatrix}_{in} \right).$$

Denselben Abstand müssen auch die 1. und 2. Polarisation nach der Transformation einhalten. Es gilt also:

$$\arccos\left( \begin{bmatrix} s_{1,1} \\ s_{2,1} \\ s_{3,1} \end{bmatrix}_{in} * \begin{bmatrix} s_{1,2} \\ s_{2,2} \\ s_{3,2} \end{bmatrix}_{in} \right) = \arccos\left( \begin{bmatrix} s_{1,1} \\ s_{2,1} \\ s_{3,1} \end{bmatrix}_{out} * \begin{bmatrix} s_{1,2} \\ s_{2,2} \\ s_{3,2} \end{bmatrix}_{out} \right)$$

Außerdem soll gefordert werden, dass die 1. Polarisation identisch zu H ist und die 2. Polarisation mit theta>0 auf dem Äquator liegt.

$$\begin{bmatrix} s_{1,1} \\ s_{2,1} \\ s_{3,1} \end{bmatrix}_{out} = \begin{bmatrix} 1 \\ 0 \\ 0 \end{bmatrix}_{out} \quad ; \quad \begin{bmatrix} s_{1,2} \\ s_{2,2} \\ s_{3,2} \end{bmatrix}_{out} * \begin{bmatrix} s_{1,2} \\ s_{2,2} \\ 0 \end{bmatrix}_{out} \quad ; \quad s_{2,2} > 0 \quad ; \quad s_{2,2\,out}^2 + s_{1,2\,out}^2 = 1$$

Der Winkel $\alpha$ zwischen 1. und 2. Polarisation spiegelt sich direkt in $s_{1,2\,out}$ und $s_{2,2\,out}$ wieder.

$$\arctan \frac{s_{2,2\,out}}{s_{1,2\,out}} = \arccos \left( \begin{bmatrix} s_{1,1} \\ s_{2,1} \\ s_{3,1} \end{bmatrix}_{in} * \begin{bmatrix} s_{1,2} \\ s_{2,2} \\ s_{3,2} \end{bmatrix}_{in} \right)$$

Die dritten noch fehlenden Vektoren für in und out können einfach durch die mittlere Polarisation der beiden ersten erhalten werden.

$$\begin{bmatrix} s_{1,3} \\ s_{2,3} \\ s_{3,3} \end{bmatrix}_{in} = \frac{\begin{bmatrix} s_{1,1} \\ s_{2,1} \\ s_{3,1} \end{bmatrix}_{in} + \begin{bmatrix} s_{1,2} \\ s_{2,2} \\ s_{3,2} \end{bmatrix}_{in}}{\sqrt{(s_{1,1} + s_{1,2})^2 + (s_{2,1} + s_{2,2})^2 + (s_{3,1} + s_{3,2})^2}}$$

$$\begin{bmatrix} s_{1,3} \\ s_{2,3} \\ s_{3,3} \end{bmatrix}_{out} = \frac{\begin{bmatrix} 1 \\ 0 \\ 0 \end{bmatrix}_{out} + \begin{bmatrix} s_{1,2} \\ s_{2,2} \\ 0 \end{bmatrix}_{out}}{\sqrt{(1 + s_{1,2})^2 + s_{2,2}^2}}$$

Damit sind alle drei Polarisationen vor der Transformation (in) und nach der Transformation (out) bekannt. Die Matrix m ergibt sich zu:

$$m = s_{out} * s_{in}^{-1} \quad ; \quad m = \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{out} * \begin{bmatrix} s_{1,1} & s_{1,2} & s_{1,3} \\ s_{2,1} & s_{2,2} & s_{2,3} \\ s_{3,1} & s_{3,2} & s_{3,3} \end{bmatrix}_{in}^{-1}$$

Die durch m verkörperte Transformation entspricht der Rotation des kartesischen Koordinatensystems ($s_1$, $s_2$, $s_3$) innerhalb der Poincaré-Kugel.

$$\begin{bmatrix} s_1 \\ s_2 \\ s_3 \end{bmatrix}_{out} = \begin{bmatrix} \cos\alpha_1 & \cos\beta_1 & \cos\chi_1 \\ \cos\alpha_2 & \cos\beta_2 & \cos\chi_2 \\ \cos\alpha_3 & \cos\beta_3 & \cos\chi_3 \end{bmatrix} * \begin{bmatrix} s_1 \\ s_2 \\ s_3 \end{bmatrix}_{in}$$

Dabei sind:

$\alpha_1, \beta_1, \chi_1$       Winkel zwischen den $s_1$-Achsen vor und nach der Drehung,
$\alpha_2, \beta_2, \chi_2$       Winkel zwischen den $s_2$-Achsen vor und nach der Drehung,
$\alpha_3, \beta_3, \chi_3$       Winkel zwischen den $s_3$-Achsen vor und nach der Drehung.

Es gilt

$$Det \begin{bmatrix} \cos\alpha_1 & \cos\beta_1 & \cos\chi_1 \\ \cos\alpha_2 & \cos\beta_2 & \cos\chi_2 \\ \cos\alpha_3 & \cos\beta_3 & \cos\chi_3 \end{bmatrix} = 1$$

Die gesamte Müller-Matrix der Polarisationstransformation ist:

$$M = \begin{bmatrix} 1 & 0 & 0 & 0 \\ 0 & m_{1,1} & m_{1,2} & m_{1,3} \\ 0 & m_{2,1} & m_{2,2} & m_{2,3} \\ 0 & m_{3,1} & m_{3,2} & m_{3,3} \end{bmatrix}$$

Diese Matrix M zur absoluten Kalibrierung kann unmittelbar mit in die inverse Intrumenten-Matrix B einfließen:

$$S = M * B * I \; ; \quad \begin{bmatrix} S_0 \\ S_1 \\ S_2 \\ S_3 \end{bmatrix} = \begin{bmatrix} 1 & 0 & 0 & 0 \\ 0 & m_{1,1} & m_{1,2} & m_{1,3} \\ 0 & m_{2,1} & m_{2,2} & m_{2,3} \\ 0 & m_{3,1} & m_{3,2} & m_{3,3} \end{bmatrix} * \begin{bmatrix} b_{00} & b_{01} & b_{02} & b_{03} \\ b_{10} & b_{11} & b_{12} & b_{13} \\ b_{20} & b_{21} & b_{22} & b_{23} \\ b_{30} & b_{31} & b_{32} & b_{33} \end{bmatrix} * \begin{bmatrix} I_0 \\ I_1 \\ I_2 \\ I_3 \end{bmatrix}$$

Die Matrizen M und B werden zweckmäßig zu einer Matrix C zusammengefaßt.

$$S = C * I \quad ; \quad \begin{bmatrix} S_0 \\ S_1 \\ S_2 \\ S_3 \end{bmatrix} = \begin{bmatrix} c_{00} & c_{01} & c_{02} & c_{03} \\ c_{10} & c_{11} & c_{12} & c_{13} \\ c_{20} & c_{21} & c_{22} & c_{23} \\ c_{30} & c_{31} & c_{32} & c_{33} \end{bmatrix} * \begin{bmatrix} I_0 \\ I_1 \\ I_2 \\ I_3 \end{bmatrix}$$

Die Matrix C beinhaltet die durch den iterativen Prozeß erhaltene sehr gute relative Genauigkeit zusammen mit der absoluten Ausrichtung der berechrieten Polarisationen.

# EP 1 353 158 B1

## Beschreibung der Zeichnungen

| Fig. 1 | Aufbau zur absoluten Kalibrierung eines Polarimeters mit deterministischem Polarisationssteller |
|---|---|
| Fig. 2 | Aufbau zur Kalibrierung eines Polarimeters mit nicht deterministischem Polarisationssteller und Vergleichs-Polarimeter |
| Fig. 3 | Aufbau zur relativen Kalibrierung eines Polarimeters mit nicht deterministischem Polarisationssteller jedoch ohne VergleichsPolarimeter |
| Fig. 4 | Aufbau zur absoluten Kalibrierung eines Inline-Faser-Polarimeters mit nichtdeterministischem Polarisationssteller und VergleichsPolarimeter |
| Fig. 5 | Verteilung der vier Kalibrier- und weiterer zehn möglicher Hilfs-Polarisationszuständen auf der Poincaré-Kugel (13) |

## Bezugszeichenliste

| 1 | Laser |
|---|---|
| 2 | Manueller Polarisationssteller |
| 3 | Deterministischer Polarisationssteller |
| 4 | Polarisator |
| 5 | $\lambda/4$ Wellenplatte |
| 6 | $\lambda/2$ Wellenplatte |
| 7 | zu kalibrierendes Polarimeter |
| 8 | Auswerte- und Anzeigeeinheit |
| 9 | Manueller Polarisationssteller |
| 10 | Koppler |
| 11 | Vergleichs-Polarimeter |
| 12 | zu kalibrierendes Faser-Polarimeter |
| 13 | Poincaré-Kugel |

## Patentansprüche

1. Verfahren zur Kalibrierung eines Polarimeters, wobei das Polarimeter mehrere Detektoren aufweist, deren Detektorströme mit den zu messenden Stokes-Parametern jeweils in Beziehung stehen, folgende Schritte umfassend:

   a) Einspeisen von mehreren verschiedenen Eingangspolarisationen mit jeweils dem gleichen Polarisationsgrad und gleicher oder bekannter Leistung in das zu kalibrierende Polarimeter;
   b) Erfassen der Detektorströme bei mehreren verschiedenen Kalibrier-Polarisationen, die jeweils eine der mehreren Eingangspolarisationen darstellen;
   c) Erfassen der Detektorströme bei mindestens einer Hilfspolarisation, die von den Kalibrierungspolarisationen unabhängig ist und ebenfalls eine der mehreren Eingangspolarisationen darstellt;
   d) Aufstellung einer Instrumentenmatrix in Abhängigkeit von Stokes-Parametem, die auf den in Schritt b) erfassten Detektorströmen der mehreren Kalibrier-Polarisationen basieren, unter Berücksichtigung der bekannten Leistungen, zumindest wenn sie nicht gleich sind;

   **wobei**
   bei der Aufstellung der Instrumentenmatrix in Schritt d) einer oder mehrere Stokes-Parameter mindestens einer der Kalibrier-Polarisationen aus Schritt b) mit einem Korrektur-Parameter als Variable dargestellt wird und der Wert des Korrektur-Parameters durch eine Minimierung einer Fehlergröße aus den Abweichungen der Polarisationsgrade der mehreren Eingangspolarisationen des Polarimeters unter Verwendung der Hilfspolarisation ermittelt wird.

2. Verfahren nach Anspruch 1,
   **gekennzeichnet durch** iteratives Bestimmen des Korrektur-Parameters.

3. Verfahren nach einem der vorhergehenden Ansprüche,
   **dadurch gekennzeichnet,**
   **dass** die Fehlergröße des Polarimeters aus den Abweichungen der Polarisationsgrade zwischen den Kalibrier-Polarisationen und der mindestens einen Hilfspolarisation ermittelt wird, wobei die Polarisationsgrade mit der in Schritt d) berechneten Instrumentenmatrix bestimmt werden.

4. Verfahren nach einem der vorhergehenden Ansprüche,
   **dadurch gekennzeichnet, dass** die Detektorströme und die Stokes-Parameter jeweils in linearer Abhängigkeit stehen.

5. Verfahren zur Kalibrierung eines Polarimeters nach einem der vorhergehenden Ansprüche,
   **dadurch gekennzeichnet, dass** die Kalibrier-Polarisationen mit Hilfe eines beliebigen Polarisationsstellers und eines Vergleichs-Polarimeters (11) eingestellt werden, wobei das Vergleichs-Polarimeter (11) ungenauer sein kann als die angestrebte Genauigkeit des zu kalibrierenden Polarimeters (7 bzw. 12).

6. Verfahren zur Kalibrierung eines Polarimeters nach einem der vorhergehenden Ansprüche,
   **dadurch gekennzeichnet, dass** die Kalibrier-Polarisationen aus mehreren, mit Hilfe eines beliebigen Polarisationsstellers erzeugten Polarisationen ausgesucht werden und die Auswahl so erfolgt, dass die Detektorströme eine grobe Zuordnung zu bekannten Polarisationen ermöglichen.

7. Verfahren zur Kalibrierung eines Polarimeters nach einem der vorhergehenden Ansprüche,
   **dadurch gekennzeichnet, dass** die mindestens eine für das Iterationsverfahren notwendige Hilfspolarisation entweder ein zufälliger und unbekannter Polarisationszustand oder ein deterministischer Polarisationszustand sein kann.

8. Verfahren zur Kalibrierung eines Polarimeters nach einem der vorhergehenden Ansprüche,
   **dadurch gekennzeichnet, dass** die für das Iterationsverfahren in das Polarimeter (7 bzw. 12) eingespeisten Hilfspolarisationen möglichst gleichverteilt auf der Poincaré-Kugel (13) liegen.

9. Verfahren zur Kalibrierung eines Polarimeters nach einem der vorhergehenden Ansprüche,
   **dadurch gekennzeichnet, dass** der konstante Polarisationsgrad DOP der zur Kalibrierung verwendeten Eingangspolarisationen gleich 1, also ein Polarisationsgrad von 100% ist.

10. Verfahren zur Kalibrierung eines Polarimeters nach einem der vorhergehenden Ansprüche,
    **dadurch gekennzeichnet, dass** der mittlere quadratische Fehler des Polarisationsgrads DOP der Eingangspolarisationen möglichst gering ist und insbesondere

$$DOP_{diff} = \sqrt{\frac{1}{n}\sum_{i=1}^{n}\left(DOP_i - 1\right)^2} = 0$$

ist, wobei n die Anzahl der Eingangspolarisationen darstellt.

11. Verfahren zur Kalibrierung eines Polarimeters nach einem der vorhergehenden Ansprüche,
    **dadurch gekennzeichnet, dass** zur Minimierung der Fehlergröße nur der gemessene Polarisationsgrad aller Hilfspolarisationen verwendet wird.

12. Verfahren zur Kalibrierung eines Polarimeters nach einem der vorhergehenden Ansprüche,

**dadurch gekennzeichnet, dass** die Ermittlung des Korrektur-Parameters nach einem Trial-and-Error-Verfahren iterativ erfolgt.

13. Verfahren zur Kalibrierung eines Polarimeters nach einem der vorhergehenden Ansprüche,
    **dadurch gekennzeichnet, dass** die optischen Leistungen bei den Polarisationszuständen des ersten Kalibrierschrittes mit einem Leistungsmessgerät erfasst werden und dass entweder die jeweiligen Detektorströme auf eine konstante Leistung normiert werden, bevor diese in die Bestimmung der Instrumentenmatrix eingehen oder dass die Leistungswerte direkt in die Berechnung der Instrumentenmatrix eingehen.

14. Verfahren zur Kalibrierung eines Polarimeters nach einem der vorhergehenden Ansprüche,
    **dadurch gekennzeichnet, dass** zur Kalibrierung der Leistungsanzeige des Polarimeters eine oder mehrere Vergleichsmessungen mit einem Leistungsmessgerät durchgeführt werden und die Leistungsanzeige des Polarimeters (7 bzw. 12) mit einem Korrekturwert versehen wird.

15. Verfahren zur Kalibrierung eines Polarimeters nach einem der vorhergehenden Ansprüche,
    **dadurch gekennzeichnet, dass** nach abgeschlossener relativer Kalibrierung, beispielsweise durch Verwendung zufälliger Eingangspolarisationen für das Kalibrierverfahren, eine absolute Kalibrierung erfolgten kann, die durch PolarisationsTransformation erreicht wird.

16. Verfahren zur Kalibrierung eines Polarimeters nach Anspruch 15,
    **dadurch gekennzeichnet, dass** für die absolute Kalibrierung lediglich zwei lineare Polarisationen in das Polarimeter eingespeist werden, wobei bei einem Polarisationszustand der Azimuth bekannt sein muss und bei dem zweiten Polarisationszustand lediglich bekannt sein muss, ob der Azimuthwinkel größer oder kleiner als der Azimuthwinkel des anderen Polarisationszustandes ist.

17. Verfahren zur Kalibrierung eines Polarimeters nach Anspruch 15,
    **dadurch gekennzeichnet, dass** für die absolute Kalibrierung die beiden relativen Polarisationszustände aus der Instrumentenmatrix berechnet werden, bei denen bei konstanter Leistung zwei Detektorströme ihr Maximum erreichen würden und diese beiden relativen Polarisationszustände auf bekannte, absolute Polarisationen transformiert werden.

18. Verfahren zur Kalibrierung eines Polarimeters nach Anspruch 15,
    **dadurch gekennzeichnet, dass** die absolute Kalibrierung bezüglich Polarisationen erfolgt, die durch die Doppelbrechungsachsen einer PM-Faser oder die RotationsAchsen eines beliebigen Polarisationsstellers definiert sind.

**Claims**

1. Method for calibrating a polarimeter, wherein the polarimeter exhibits several detectors the detector currents of which are related to the Stokes parameters to be measured, comprising the following steps:

   a) Feeding several different input polarizations of equal polarization degree and equal or known power, each into the polarimeter to be calibrated;
   b) Acquiring the detector currents in several different calibration polarizations, each representing one of the several input polarizations;
   c) Acquiring the detector currents in at least one auxiliary polarization which is independent of the calibration polarizations and equally represents one of the several input polarizations;
   d) Forming an instrument matrix in dependence on Stokes parameters which are based on detector currents of the several calibration polarizations acquired in step b) in consideration of the known powers at least, when they are not equal;

   **wherein**
   when forming the instrument matrix in step d), one or several Stokes parameters of at least one of the calibration polarizations from step b) is/are represented with a correction parameter as variable and the value of the correction parameter is established by a minimization of an error size from the deviations of the polarization degrees of the several input polarizations of the polarimeter using the auxiliary polarization.

2. Method according to claim 1,

**characterized by**
iterative determining of the correction parameter.

3. Method according to one of the preceding claims,
   **characterized in that**
   the error size of the polarimeter is identified from the deviations of the polarization degrees between the calibration polarizations and the at least one auxiliary polarization, wherein the polarization degrees are determined by means of the instrument matrix calculated in step d).

4. Method according to one of the preceding claims,
   **characterized in that**
   the detector currents and the Stokes parameters are each in linear dependency.

5. Method for calibrating a polarimeter according to one of the preceding claims,
   **characterized in that**
   the calibration polarizations are adjusted with the aid of a random polarization controller and a comparison polarimeter (11), wherein the comparison polarimeter (11) may be less precise than the target precision of the polarimeter (7 or 12) to be calibrated.

6. Method for calibrating a polarimeter according to one of the preceding claims,
   **characterized in that**
   the calibration polarizations are selected from several polarizations generated with the aid of a random polarization controller and the selection being performed in such a way that the detector currents allow for a rough allocation to known polarizations.

7. Method for calibrating a polarimeter according to one of the preceding claims,
   **characterized in that**
   the at least one auxiliary polarization required for the iteration process may be either a random and unknown state of polarization or a deterministic state of polarization.

8. Method for calibrating a polarimeter according to one of the preceding claims,
   **characterized in that**
   the auxiliary polarizations fed into the polarimeter (7 or 12) for the iteration process are lying distributed as evenly as possible across the Poincaré sphere (13).

9. Method for calibrating a polarimeter according to one of the preceding claims,
   **characterized in that**
   the constant degree of polarization DOP of the input polarizations used for the calibration equals 1, i.e. a degree of polarization of 100%.

10. Method for calibrating a polarimeter according to one of the preceding claims,
    **characterized in that**
    the mean square error of the polarization degree DOP of the input polarizations is as small as possible and in particular is

$$DOP_{diff} = \sqrt{\frac{1}{n}\sum_{i=1}^{n}(DPO_i - 1)^2} = 0$$

wherein n represents the number of input polarizations.

11. Method for calibrating a polarimeter according to one of the preceding claims,
    **characterized in that**
    for minimising the error size only the measured polarization degree of all auxiliary polarizations is used.

**12.** Method for calibrating a polarimeter according to one of the preceding claims
**characterized in that**
identification of the correction parameter is effected iteratively by way of trial and error.

**13.** Method for calibrating a polarimeter according to one of the preceding claims,
**characterized in that**
the optical powers at the states of polarization of the first calibration step are measured by a powermeter and that either the respective detector currents are normalized to a constant power before these are employed for the determination of the instrument matrix, or that the power values directly enter the calculation of the instrument matrix.

**14.** Method for calibrating a polarimeter according to one of the preceding claims,
**characterized in that**
for the calibration of the power display of the polarimeter one or several comparison measurements are carried out with a powermeter and the power display of the polarimeter (7 or 12) is fitted with a correction value.

**15.** Method for calibrating a polarimeter according to one of the preceding claims,
**characterized in that**
upon completed relative calibration, e.g. by the use of random input polarizations for the calibration method, an absolute calibration can take place, which is accomplished through polarization transformation.

**16.** Method for calibrating a polarimeter according to claim 15,
**characterized in that**
for the absolute calibration, merely two linear polarizations are fed into the polarimeter, wherein for one state of polarization the azimuth has to be known and for the second state of polarization it merely has to be known whether the azimuth angle is larger or smaller than the azimuth angle of the other state of polarization.

**17.** Method for calibrating a polarimeter according to claim 15,
**characterized in that**
for the absolute calibration the two relative states of polarization, at which, with the power being constant, two detector currents would reach their maximum, are calculated from the instrument matrix and that these two relative states of polarization are transformed to known, absolute polarizations.

**18.** Method for calibrating a polarimeter according to claim 15,
**characterized in that**
the absolute calibration is effected with reference to polarizations which are defined by the birefringent axes of a PM fibre or the rotation axes of a random polarization controller.


**Revendications**

**1.** Procédé d'étalonnage d'un polarimètre dans lequel le polarimètre présente plusieurs détecteurs dont les courants de détecteur sont chaque fois en rapport avec les paramètres de Stokes à mesurer, comprenant les étapes suivantes :

a) fourniture au polarimètre à étalonner de plusieurs polarisations différentes d'entrée ayant chaque fois le même degré de polarisation et une puissance égale ou connue ;
b) acquisition des courants de détecteur pour plusieurs polarisations différentes d'étalonnage qui représentent chaque fois l'une des multiples polarisations d'entrée ;
c) acquisition des courants de détecteur pour au moins une polarisation auxiliaire qui est indépendante des polarisations d'étalonnage et qui représente également l'une des multiples polarisations d'entrée ;
d) réalisation d'une matrice d'instrument en relation avec des paramètres de Stokes qui reposent sur les courants de détecteur des multiples polarisations d'étalonnage acquis à l'étape b), en tenant compte des puissances connues, au moins lorsqu'elles ne sont pas égales ;
**dans lequel,**
lors de la réalisation de la matrice d'instrument à l'étape d), un ou plusieurs paramètres de Stokes d'au moins l'une des polarisations d'étalonnage de l'étape b) est représentée avec un paramètre de correction en tant que variable, et la valeur du paramètre de correction est déterminée par une minimisation d'une grandeur d'erreur des écarts des degrés de polarisation des multiples polarisations d'entrée du polarimètre en utilisant la polarisation auxiliaire.

**2.** Procédé selon la revendication 1,
   **caractérisé par** la détermination itérative du paramètre de correction.

**3.** Procédé selon l'une quelconque des revendications précédentes,
**caractérisé en ce que**
la grandeur d'erreur du polarimètre est déterminée des écarts des degrés de polarisation entre les polarisations d'étalonnage et la au moins une polarisation auxiliaire, les degrés de polarisation étant déterminés au moyen de la matrice d'instrument calculée à l'étape d).

**4.** Procédé selon l'une quelconque des revendications précédentes,
**caractérisé en ce que** les courants de détecteur et les paramètres de Stokes figurent chaque fois en dépendance linéaire.

**5.** Procédé d'étalonnage d'un polarimètre selon l'une quelconque des revendications précédentes,
**caractérisé en ce que** les polarisations d'étalonnage sont réglées à l'aide d'un régulateur de polarisation quelconque et d'un polarimètre de comparaison (11), le polarimètre de comparaison (11) pouvant être moins précis que la précision visée pour le polarimètre à étalonner (7 ou 12).

**6.** Procédé d'étalonnage d'un polarimètre selon l'une quelconque des revendications précédentes,
**caractérisé en ce que** les polarisations d'étalonnage sont sélectionnées parmi plusieurs polarisations générées par un régulateur de polarisation quelconque et que la sélection s'effectue de manière telle que les courants de détecteur permettent une affectation grossière à des polarisations connues.

**7.** Procédé d'étalonnage d'un polarimètre selon l'une quelconque des revendications précédentes,
**caractérisé en ce que** la au moins une polarisation auxiliaire nécessaire pour le processus d'itération peut être soit un état de polarisation aléatoire et inconnu soit un état de polarisation déterministe.

**8.** Procédé d'étalonnage d'un polarimètre selon l'une quelconque des revendications précédentes,
**caractérisé en ce que** les polarisations auxiliaires fournies au polarimètre (7 ou 12) pour le processus d'itération sont si possible réparties de façon uniforme sur la sphère de Poincaré (13).

**9.** Procédé d'étalonnage d'un polarimètre selon l'une quelconque des revendications précédentes,
**caractérisé en ce que** le degré de polarisation constant DOP des polarisations d'entrée utilisées pour l'étalonnage est égal à 1, autrement dit, à un degré de polarisation de 100 %.

**10.** Procédé d'étalonnage d'un polarimètre selon l'une quelconque des revendications précédentes,
**caractérisé en ce que** l'erreur quadratique moyenne du degré de polarisation DOP des polarisations d'entrée est aussi faible que possible et est en particulier

$$DOP_{diff} = \sqrt{\frac{1}{n} \sum_{i=1}^{n} (DOP_i - 1)^2} = 0$$

n représentant le nombre de polarisations d'entrée.

**11.** Procédé d'étalonnage d'un polarimètre selon l'une quelconque des revendications précédentes,
**caractérisé en ce que** pour minimiser la grandeur d'erreur seul le degré de polarisation mesuré de toutes les polarisations auxiliaires est utilisé.

**12.** Procédé d'étalonnage d'un polarimètre selon l'une quelconque des revendications précédentes,
**caractérisé en ce que** la détermination du paramètre de correction s'effectue de façon itérative, par un procédé « Trial and Error ».

**13.** Procédé d'étalonnage d'un polarimètre selon l'une quelconque des revendications précédentes,

**caractérisé en ce que** les puissances optiques des états de polarisation de la première étape d'étalonnage sont acquises avec un appareil de mesure de puissance et que soit les courants de détecteur correspondants soient normalisés à une puissance constante avant que ceux-ci ne soient pris en compte dans la détermination de la matrice d'instrument, soit les valeurs de puissance sont directement prises en compte dans le calcul de la matrice d'instrument.

14. Procédé d'étalonnage d'un polarimètre selon l'une quelconque des revendications précédentes,
    **caractérisé en ce que** pour l'étalonnage de l'affichage de puissance du polarimètre, une ou plusieurs mesures comparatives sont réalisées avec un appareil de mesure de puissance, et l'affichage de puissance du polarimètre (7 ou 12) est pourvu d'une valeur de correction.

15. Procédé d'étalonnage d'un polarimètre selon l'une quelconque des revendications précédentes,
    **caractérisé en ce que,** une fois l'étalonnage relatif terminé, par exemple par utilisation de polarisation d'entrée aléatoire pour le processus d'étalonnage, un étalonnage absolu peut s'effectuer, obtenu par transformation de polarisations.

16. Procédé d'étalonnage d'un polarimètre selon la revendication 15,
    **caractérisé en ce que,** pour l'étalonnage absolu; seulement deux polarisations linéaires sont fournies au polarimètre, l'azimut devant être connu pour un état de polarisation et, pour le deuxième état de polarisation, il doit seulement être connu si l'angle d'azimut est supérieur ou inférieur à l'angle de l'azimut de l'autre état de polarisation.

17. Procédé d'étalonnage d'un polarimètre selon la revendication 15,
    **caractérisé en ce que,** pour l'étalonnage absolu, les deux états relatifs de polarisation sont calculés à partir de la matrice d'instrument, dans lesquels, pour une puissance constante, deux courants de détecteur atteindraient leur maximum et ces deux états relatifs de polarisation sont transformés en des polarisations absolues, connues.

18. Procédé d'étalonnage d'un polarimètre selon la revendication 15,
    **caractérisé en ce que** l'étalonnage absolu se réalise en fonction de polarisations qui sont définies par les axes de double réfraction d'une fibre PM ou les axes de rotation d'un régulateur de polarisation quelconque.

Fig. 1

Fig. 2

Fig. 3

Fig. 4

Fig. 5